# EUROPEAN PATENT APPLICATION

(11) **EP 4 015 477 A1**
(43) Date of publication of application: **22.06.2022**
(21) Application number: 21865337.6
(22) Date of filing: 24.06.2021
(51) Int. Cl.: C03C 25/00, C08F 290/06, C08G 18/00, C09D 175/14, G02B 6/44

(54) **RESIN COMPOSITION, METHOD FOR MANUFACTURING RESIN COMPOSITION, OPTICAL FIBER, AND METHOD FOR MANUFACTURING OPTICAL FIBER**

(30) Priority: 25.09.2020 JP 2020160824
(71) Applicant: Sumitomo Electric Industries, Ltd., Osaka-shi, Osaka 541-0041 (JP)
(72) Inventor: HOMMA, Yuya, Osaka 541-0041 (JP)
(74) Representative: Hoffmann Eitle
(86) International application number: PCT/JP2021/023997
(87) International publication number: WO 2022/064797

(57) **Abstract**

The method for producing a resin composition for a secondary coating of an optical fiber comprises a step of reacting a polyol, a diisocyanate and a hydroxyl group-containing (meth)acrylate in the presence of a (meth)acrylate not having a hydroxyl group to obtain a mixture of urethane (meth)acrylate and the (meth)acrylate not having a hydroxyl group, and a step of adding a photopolymerization initiator to the mixture to obtain a resin composition, and a hydroxyl value of the (meth)acrylate not having a hydroxyl group is 12.0 mgKOH/g or less.

## Description

### Technical Field

The present disclosure relates to a resin composition for a secondary coating of an optical fiber, a method for producing a resin composition, an optical fiber, and a method for producing an optical fiber.

The present application claims priority based on Japanese Patent Application No. 2020-160824 filed on September 25, 2020, and incorporates herein the whole contents described in the Japanese Patent Application by reference.

### Background Art

In recent years, the demand for a high-density cable having an increased packing density of optical fiber has grown in the data center applications. In general, an optical fiber has a coating resin layer for protecting a glass fiber which is an optical transmitter. The coating resin layer is composed of, for example, two layers of a primary resin layer that comes into contact with a glass fiber and a secondary resin layer that is formed as an external layer of the primary resin layer. With increased packing density of optical fiber, an external force (lateral pressure) is applied to the optical fiber, and microbend loss tends to increase. In order to improve lateral pressure characteristics of the optical fiber, it is known to decrease a Young's modulus of the primary resin layer and to increase a Young's modulus of the secondary resin layer. In order to impart moderate toughness to the secondary resin, urethane (meth)acrylate is generally used. For example, in Patent Literatures 1 and 2, it is described that a resin layer is formed using a resin composition containing, as a photopolymerizable compound, urethane (meth)acrylate having a specific structure.

### Citation List

### Patent Literature

Patent Literature 1: JP 2012-57124 A
Patent Literature 2: JP 2005-121772 A

### Summary of Invention

The method for producing a resin composition for a secondary coating of an optical fiber according to one embodiment of the present disclosure comprises a step of reacting a polyol, a diisocyanate and a hydroxyl group-containing (meth)acrylate in the presence of a (meth)acrylate not having a hydroxyl group to obtain a mixture of urethane (meth)acrylate and the (meth)acrylate not having a hydroxyl group, and a step of adding a photopolymerization initiator to the mixture to obtain a resin composition, and a hydroxyl value of the (meth)acrylate not having a hydroxyl group is 12.0 mgKOH/g or less.

The resin composition for a secondary coating of an optical fiber according to one embodiment of the present disclosure comprises a photopolymerizable compound and a photopolymerization initiator, and the photopolymerizable compound comprises a mixture of a (meth)acrylate not having a hydroxyl group, a hydroxyl value of the (meth)acrylate being 12.0 mgKOH/g or less, and urethane (meth)acrylate.

### Brief Description of Drawing

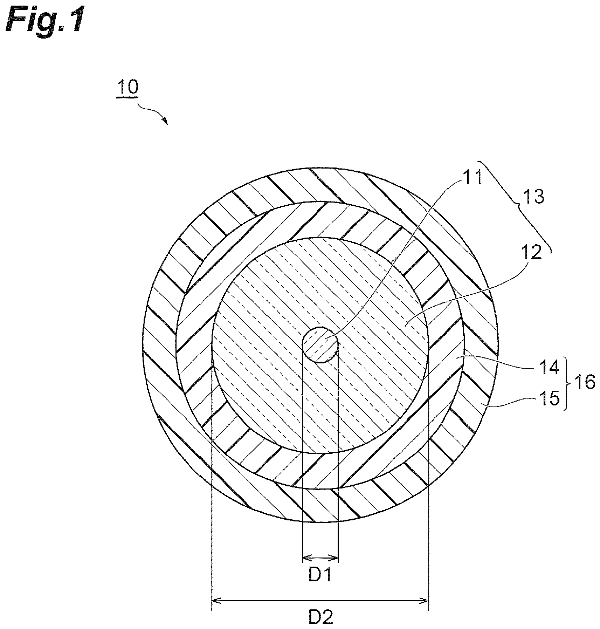

[Figure 1] Figure 1 is a schematic cross-sectional view showing one example of an optical fiber according to the present embodiment.

### Description of Embodiments

### [Problem to be solved by the Present Disclosure]

A resin composition capable of forming a resin layer of a high Young's modulus tends to be decreased in coating properties because the viscosity is high. On that account, the resin composition for forming a secondary resin layer is required to be excellent in coating properties and to form a resin layer having a Young's modulus suitable for the secondary resin layer.

It is an object of the present disclosure to provide a resin composition which is excellent in coating properties and can form a resin layer having a Young's modulus suitable for a secondary resin layer and a method for producing a resin composition.

### [Effects of the Present Disclosure]

According to the present disclosure, a resin composition which is excellent in coating properties and can form a resin layer having a Young's modulus suitable for a secondary resin layer and a method for producing a resin composition can be provided.

### [Description of Embodiments of the Present Disclosure]

First, the contents of the embodiments of the present disclosure are listed and described. The method for producing a resin composition for a secondary coating of an optical fiber according to one embodiment of the present disclosure comprises a step of reacting a polyol, a diisocyanate and a hydroxyl group-containing (meth)acrylate in the presence of a (meth)acrylate not having a hydroxyl group to obtain a mixture of urethane (meth)acrylate and the (meth)acrylate not having a hydroxyl group, and a step of adding a photopolymerization initiator to the mixture to obtain a resin composition, and a hydroxyl value of the (meth)acrylate not having a hydroxyl group is 12.0 mgKOH/g or less.

By the method according to the present embodiment, a hydroxyl value of the (meth)acrylate not having a hydroxyl group is specified, and thereby, a resin composition which is excellent in coating properties and can form a resin layer having a Young's modulus suitable for a secondary resin layer can be prepared.

From the viewpoint of imparting moderate toughness to the resin layer, epoxy (meth)acrylate may be further added in the step of obtaining a resin composition.

The resin composition for a secondary coating of an optical fiber according to one embodiment of the present disclosure is a resin composition comprising a photopolymerizable compound and a photopolymerization initiator, and the photopolymerizable compound comprises a mixture of a (meth)acrylate not having a hydroxyl group, a hydroxyl value of the (meth)acrylate being 12.0 mgKOH/g or less, and urethane (meth)acrylate.

Such a resin composition is excellent in coating properties and can form a resin layer having a Young's modulus suitable for a secondary resin layer.

From the viewpoint of imparting moderate toughness to the resin layer, the photopolymerizable compound may further comprise epoxy (meth)methacrylate.

From the viewpoint of improving stability in the synthesis of urethane (meth)acrylate, the hydroxyl value of the (meth)acrylate not having a hydroxyl group may be 8.0 mgKOH/g or less.

From the viewpoint of adjusting properties suitable for the secondary resin layer, the (meth)acrylate not having a hydroxyl group may be at least one selected from the group consisting of isodecyl (meth)acrylate, 2-(2-ethoxyethoxy)ethyl (meth)acrylate, 2-ethylhexyl (meth)acrylate, nonylphenol polyethylene glycol (meth)acrylate, isobornyl (meth)acrylate, lauryl (meth)acrylate, phenoxyethyl (meth)acrylate, tripropylene glycol di(meth)acrylate, and 1,6-hexanediol di(meth)acrylate.

The optical fiber according to one embodiment of the present disclosure comprises a glass fiber comprising a core and a cladding, a primary resin layer being in contact with the glass fiber and coating the glass fiber, and a secondary resin layer coating the primary resin layer, and the secondary resin layer comprises a cured product of the above resin composition. Such an optical fiber can have improved lateral pressure characteristics.

The method for producing an optical fiber according to one embodiment of the present disclosure comprises an application step of applying a resin composition obtained by the above method to an outer periphery of a glass fiber comprising a core and a cladding, and a curing step of curing the resin composition by irradiation with ultraviolet rays after the application step. Due to this, the productivity of the optical fiber can be improved, and an optical fiber which is excellent in lateral pressure characteristics can be prepared.

### [Details of Embodiments of the Present Disclosure]

Specific examples of the resin composition and the optical fiber according to the present embodiments will be described referring to the drawing as needed. The present disclosure is not limited to these examples, and the present disclosure is indicated by the scope of claims and is intended to include meanings equivalent to the scope of claims and all the changes within the scope of claims. In the following description, like elements are given like reference signs regarding the description of the drawing, so that repeated description is omitted.

### (Resin composition)

The resin composition according to the present embodiment is a resin composition comprising a photopolymerizable compound and a photopolymerization initiator, and the photopolymerizable compound comprises a mixture of a (meth)acrylate not having a hydroxyl group, a hydroxyl value of which is 12.0 mgKOH/g or less, and urethane (meth)acrylate.

The resin composition according to the present embodiment can be prepared through a step of reacting a polyol, a diisocyanate and a hydroxyl group-containing (meth)acrylate in the presence of a (meth)acrylate not having a hydroxyl group to obtain a mixture of urethane (meth)acrylate and the (meth)acrylate not having a hydroxyl group, and a step of adding a photopolymerization initiator to the mixture to obtain a resin composition. In the step of obtaining a resin composition, epoxy (meth)acrylate may be further added.

The urethane (meth)acrylate can be obtained by reacting a polyol and a diisocyanate at NCO/OH of 1.5 or more and 4 or less to form an intermediate having NCO at an end and then reacting a hydroxyl group-containing (meth)acrylate with the intermediate. By reacting a polyol, a diisocyanate and a hydroxyl group-containing (meth)acrylate in the presence of a (meth)acrylate compound which is non-reactive to a polyol or a diisocyanate, the molecular weight distribution of the urethane (meth)acrylate, which affects the viscosity of the resin composition, is easily adjusted. However, when synthesis of urethan (meth)acrylate is tried in the presence of a (meth)acrylate not having a hydroxyl group, urethan (meth)acrylate sometimes gels, or variation in the molecular weight distribution of the urethane (meth)acrylate sometimes occurs. The reason is that if an impurity having a hydroxyl group is contained in the (meth)acrylate not having a hydroxyl group, the impurity reacts with the diisocyanate, and substantial NCO/OH is decreased.

Examples of the impurities having a hydroxyl group include a residual component of an alcohol compound which is a raw material for synthesizing a (meth)acrylate and a side product. In the case of an impurity having two or more hydroxyl groups, crosslinking reaction proceeds during the synthesis of urethane (meth)acrylate, and the urethane (meth)acrylate sometimes gels. Moreover, as the NCO/OH approaches 1, the number-average molecular weight (Mn) of the urethane (meth)acrylate increases, and the Young's modulus of the resin layer sometimes decreases. Furthermore, when the NCO/OH is smaller than 1, the NCO-terminated intermediate is not easily formed, so that a non-reactive product increases, and the Young's modulus of the resin layer sometimes decreases. In contrast with this, the resin composition prepared by the method according to the present embodiment is excellent in coating properties and can form a resin layer having a Young's modulus suitable for the secondary resin layer.

The (meth)acrylate not having a hydroxyl group, which is used in the synthesis of urethane (meth)acrylate, is written as "(meth)acrylate (A)" hereinafter.

The hydroxyl value of the (meth)acrylate (A) is 12.0 mgKOH/g or less, and it is preferable that the hydroxyl value be 11.0 mgKOH/g or less, it is more preferable that the hydroxyl value be 10.0 mgKOH/g or less, and it is still more preferable that the hydroxyl value be 8.0 mgKOH/g or less. If the hydroxyl value of the (meth)acrylate (A) exceeds 12.0 mgKOH/g, urethane (meth)acrylate gels during the synthesis, or the Young's modulus of the resin layer decreases. The lower limit of the hydroxyl value of the (met)acrylate (A) may be 0.1 mgKOH/g or more, 0.2 mgKOH/g or more, or 0.3 mgKOH/g or more. The hydroxyl value of the (meth)acrylate (A) can be measured based on JIS K 0070. The hydroxyl value of the (meth)acrylate (A) is a value derived from an impurity having a hydroxyl group, which is contained in the (meth)acrylate not having a hydroxyl group, and is a value obtained by measuring a hydroxyl value of the (meth)acrylate not having a hydroxyl group, which contains an impurity having a hydroxyl group.

From the viewpoint of adjusting the time required for the synthesis of urethane (meth)acrylate and the viscosity, it is preferable that a mass ratio between the urethane (meth)acrylate and the (meth)acrylate (A) in the mixture become 99:1 to 40:60, it is more preferable that the mass ratio become 95:5 to 50:50, and it is still more preferable that the mass ratio become 90:10 to 60:40.

As the (meth)acrylate (A), a monofunctional monomer having one photopolymerizable ethylenically unsaturated group, or a polyfunctional monomer having two or more photopolymerizable ethylenically unsaturated groups, hydroxyl values of the monofunctional monomer and the polyfunctional monomer each being 12.0 mgKOH/g or less, can be used. The (meth)acrylates (A) may be used by mixing two or more.

Examples of the monofunctional monomers include methyl (meth)acrylate, ethyl (meth)acrylate, propyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, phenoxyethyl (meth)acrylate, tetrahydrofurfuryl (meth)acrylate, benzyl (meth)acrylate, dicylopentenyl (meth)acrylate, dicyclopentenyloxyethyl (meth)acrylate, dicyclopentanyl (meth)acrylate, nonylphenol EO modified acrylate, nonylphenoxy EO modified (meth)acrylate, isobornyl (meth)acrylate, 3-phenyxybenzyl (meth)acrylate, methylphenoxyethyl (meth)acrylate, phenoxydiethylene glycol (meth)acrylate, phenoxypolyethylene glycol (meth)acrylate, m-phenoxybenzyl (meth)acrylate, and 2-(2-ethoxyethoxy)ethyl (meth)acrylate.

Examples of the polyfunctional monomers include bifunctional monomers, such as ethylene glycol di(meth)acrylate, polyethylene glycol di(meth)acrylate, polypropylene glycol di(meth)acrylate, neopentyl glycol di(meth)acrylate, tripropylene glycol di(meth)acrylate, triethylene glycol di(meth)acrylate, cyclohexanedimethanol di(meth)acrylate, dipropylene glycol di(meth)acrylate, tetraethylene glycol di(meth)acrylate, 1,3-butylene glycol di(meth)acrylate, 1,4-butanediol di(meth)acrylate, diethylene glycol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyldiol di(meth)acrylate, 3-ethyl-1,8-octanediol di(meth)acrylate, tricyclodecanol di(meth)acrylate, and bisphenol A-EO adduct di(meth)acrylate; and trifunctional or higher monomers, such as trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxypolypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone modified tris[(meth)acryloyloxyethyl]isocyanurate.

From the viewpoint of adjusting properties suitable for the secondary resin layer, it is preferable that the (meth)acrylate (A) be at least one selected from the group consisting of isodecyl (meth)acrylate, 2-(2-ethoxyethoxy)ethyl (meth)acrylate, 2-ethylhexyl (meth)acrylate, nonylphenol EO modified acrylate, isobornyl (meth)acrylate, lauryl (meth)acrylate, phenoxyethyl (meth)acrylate, tripropylene glycol di(meth)acrylate, and 1,6-hexanediol di(meth)acrylate, and it is more preferable that the (meth)acrylate (A) be isodecyl (meth)acrylate, 2-(2-ethoxyethoxy)ethyl (meth)acrylate, nonylphenol EO modified acrylate, lauryl (meth)acrylate, phenoxyethyl (meth)acrylate, tripropylene glycol di(meth)acrylate, or 1,6-hexanediol di(meth)acrylate.

From the viewpoint of reducing the viscosity of the mixture, it is preferable that the viscosity of the (meth)acrylate (A) at 25°C be 150 mPa·s or less, and it is more preferable that the viscosity thereof be 50 mPa·s or less.

Examples of the polyols include polytetramethylene glycol, polyethylene glycol, polypropylene glycol, polyester polyol, polycaprolactone polyol, polycarbonate polyol, polybutadiene polyol, a polyol of an alkylene oxide adduct of bisphenol A, a polyol of an alkylene oxide adduct of bisphenol F, a polyol of an alkylene oxide adduct of hydrogenated bisphenol A, and a polyol of an alkylene oxide adduct of hydrogenated bisphenol F. The polyols may be used in combination of two or more, and polyols of the same kind which differ in Mn or polyols of different kinds may be used in combination. It is preferable to use, as the polyol, polypropylene glycol, polycarbonate polyol, or a polyol of an alkylene oxide adduct of bisphenol A because a tough resin layer excellent in balance between Young's modulus and elongation at break is easily formed.

From the viewpoint of adjusting the viscosity of the urethane (meth)acrylate, Mn of the polyol may be 350 or more, 400 or more, or 500 or more, and from the viewpoint of increasing the Young's modulus, it may be 2500 or less, 2000 or less, or 1500 or less.

Examples of the diisocyanates include 2,4-tolylene diisocyanate, 2,6-tolylene diisocyanate, isophorone diisocyanate, dicyclohexylmethane diisocyanate, diphenylmethane diisocyanate, hexamethylene diisocyanate, xylylene diisocyanate, hydrogenated xylylene diisocyanate, 1,5-naphthalene diisocyanate, norbornene diisocyanate, 1,5-pentamethylene diisocyanate, tetramethylxylylene diisocyanate, and trimethylhexamethylene diisocyanate.

Examples of the hydroxyl group-containing (meth)acrylates include 2-hydroxyethyl (meth)acrylate, 2-hydroxypropyl (meth)acrylate, 2-hydroxybutyl (meth)acrylate, caprolactone (meth)acrylate, 2-hydroxy-3-phenoxypropyl (meth)acrylate, 2-(meth)acryloyloxyethyl 2-hydroxyethyl phthalate, 2-hydroxy-O-phenylphenolpropyl (meth)acrylate, 2-hydroxy-3-methacrylpropyl acrylate, trimethylolpropane di(meth)acrylate, and pentaerythritol tri(meth)acrylate.

As the catalyst in the synthesis of the urethane (meth)acrylate, an organotin compound or an amine compound is used. Examples of the organotin compounds include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the viewpoints of easy availability and catalytic performance, it is preferable to use dibutyltin dilaurate or dibutyltin diacetate as the catalyst.

Hereinafter, preparation of urethane (meth)acrylate will be described with specific examples. For example, isodecyl acrylate with a hydroxyl value of 0.5 mgKOH/g as the (meth)acrylate (A), polypropylene glycol as the polyol, 2,4-tolylene diisocyanate as the diisocyanate, and 2-hydroxyethyl acrylate as the hydroxyl group-containing (meth)acrylate are used. First, isodecyl acrylate, polypropylene glycol and 2,4-tolylene diisocyanate are added to a reaction vessel, and the polypropylene glycol and the 2,4-tolylene diisocyanate are reacted, thereby synthesizing an NCO-terminated prepolymer. Subsequently, the NCO-terminated prepolymer and the 2-hydroxyethyl acrylate are reacted, thereby synthesizing urethane acrylate. The urethane acrylate can be represented by the following formula (1).

A-(U-I-U-P)n-U-I-U-A (1)

Here, A represents a residue of 2-hydroxyethyl acrylate, U represents a urethane bond, I represents a residue of 2,4-tolylene diisocyanate, P represents a residue of polypropylene glycol, and n is an integer of 1 or more. By changing the NCO/OH, the proportion of urethan bonds possessed by the urethane acrylate can be changed. The smaller the NCO/OH is, the larger the proportion of urethane acrylate in which n is large becomes, and the larger the NCO/OH is, the larger the proportion of urethane acrylate in which n is small becomes.

it is preferable that Mn of the urethane (meth)acrylate be 500 or more and 6000 or less, and the Mn may be 600 or more and 700 or more, and may be 5000 or less, or 4000 or less. When the Mn of the urethane (meth)acrylate is 500 or more, a tough secondary resin layer is easily formed, and when the Mn is 6000 or less, the Young's modulus of the secondary resin layer is easily increased.

The content of the urethane (meth)acrylate in the resin composition may be 10 parts by mass or more and 50 parts by mass or less, 10 parts by mass or more and 45 parts by mass or less, or 10 parts by mass or more and 40 parts by mass or less, based on the total amount of the photopolymerizable compound.

It is preferable that the photopolymerizable compound according to the present embodiment contain epoxy (meth)acrylate because moderate toughness is imparted to the secondary resin layer. The epoxy (meth)acrylate is a compound obtained by reacting a compound having a (meth)acryloyl group, such as (meth)acrylic acid, with an epoxy compound having two or more glycidyl groups.

It is preferable that the epoxy (meth)acrylate have an aromatic ring because abrasion resistance of the optical fiber is improved. Examples of the epoxy (meth)acrylates having an aromatic ring include novolac epoxy (meth)acrylate, trade name "Viscoat#540" manufactured by OSAKA ORGANIC CHEMICAL INDUSTRY LTD., and trade names "Epoxy Ester 3002M", "Epoxy Ester 3002A", "Epoxy Ester 3000MK" and "Epoxy Ester 3000A" manufactured by Kyoeisha Chemical Co., Ltd.

Since flexibility is imparted to the secondary resin layer, epoxy (meth)acrylate not having an aromatic ring may be used. Examples of the epoxy (meth)acrylates not having an aromatic ring include trade names "Epoxy Ester 40EM", "Epoxy Ester 70PA", "Epoxy Ester 200PA" and "Epoxy Ester 80MFA" manufactured by Kyoeisha Chemical Co., Ltd.

The content of the epoxy (meth)acrylate may be 5 parts by mass or more and 65 parts by mass or less, 10 parts by mass or more and 60 parts by mass or less, or 20 parts by mass or more and 55 parts by mass or less, based on the total amount of the photopolymerizable compound.

In the preparation of the resin composition, to the mixture of the urethane (meth)acrylate and the (meth)acrylate (A), a (meth)acrylate having the same structure as that of the monofunctional monomer or the polyfunctional monomer given as an example of the (meth)acrylate (A) may be added, or a (meth)acrylate (B) having a structure different from that of the (meth)acrylate (A) may be added, as the photopolymerizable compound. The hydroxyl value of the (meth)acrylate added to the mixture is not particularly restricted.

Examples of the (meth)acrylates (B) include carboxyl group-containing monomers, such as 2-hydroxy-3-phenoxypropyl acrylate, (meth)acrylic acid, a (meth)acrylic acid dimer, carboxyethyl (meth)acrylate, carboxypentyl (meth)acrylate, and ω-carboxy-polycaprolactone (meth)acrylate; and nitrogen-containing monomers, such as N-acryloylmorpholine, N-vinylpyrrolidone, N-vinylcaprolactam, 3-(3-pyridinyl)propyl (meth)acrylate, N,N-dimethylacrylamide, N-hydroxyethylacrylamide, N,N-diethylacrylamide, N-isopropylacrylamide, N,N-dimethylaminopropylacrylamide, N,N-dimethylaminopropylacrylamide methyl chloride salt, diacetone acrylamide, N-acryloylpiperidine, N-methacryloylpiperidine, N-acryloylpyrrolidine, maleimide, N-cyclohexylmaleimide, N-phenylmaleimide, (meth)acrylamide, N,N-dimethyl(meth)acrylamide, N-hexyl(meth)acrylamide, N-methyl(meth)acrylamide, N-butyl(meth)acrylamide, N-methylol(meth)acrylamide, N-methylolpropane(meth)acrylamide, aminoethyl (meth)acrylate, aminopropyl (meth)acrylate, N,N-dimethylaminoethyl (meth)acrylate, and t-butylaminoethyl (meth)acrylate.

The photopolymerization initiator can be appropriately selected from known radical photopolymerization initiators and used. Examples of the photopolymerization initiators include 1-hydroxycyclohexyl phenyl ketone (Omnirad 184, manufactured by IGM Resins B.V.), 2,2-dimethoxy-2-phenylacetophenone (Omnirad 651, manufactured by IGM Resins B.V), 2,4,6-trimethylbenzoyl diphenylphosphine oxide (Omnirad TPO, manufactured by IGM Resins B.V), ethyl (2,4,6-trimethylbenzoyl)phenylphosphinate (Omnirad TPO-L, manufactured by IGM Resins B.V.), 2-benzyl-2-dimethylamino-4'-morpholinobutyrophenone (Omnirad 369, manufactured by IGM Resins B.V), 2-dimethylamino-2-(4-methyl-benzyl)-1-(4-morpholin-4-yl-phenyl)-butan-1-one (Omnirad 379, manufactured by IGM Resins B.V), bis(2,4,6-trimethylbenzoyl)phenylphosphine oxide (Omnirad 819, manufactured by IGM Resins B.V), and 2-methyl-1-[4-(methylthio)phenyl]-2-morpholinopropan-1-one (Omnirad 907, manufactured by IGM Resins B.V).

The photopolymerization initiators may be used by mixing two or more. It is preferable that the photopolymerization initiator contain 2,4,6-trimethylbenzoyl diphenylphosphine oxide because the resin composition is excellent in fast curability.

It is preferable that the content of the photopolymerization initiator be 0.2 part by mass or more and 5 parts by mass or less based on the total amount of the photopolymerizable compound, it is more preferable that the content thereof be 0.3 part by mass or more and 3 parts by mass or less, and it is still more preferable that the content thereof be 0.4 part by mass or more and 3 parts by mass or less.

The resin composition according to the present embodiment may further contain a photoacid generator, a leveling agent, an anti-foaming agent, an antioxidant, etc.

As the photoacid generator, an onium salt with a structure of A⁺B⁻may be used. Examples of the photoacid generators include sulfonium salts, such as CPI-100P, 110P (manufactured by San-Apro Ltd.), and Omnicat 270, 290 (manufactured by IGM Resins B.V), and iodonium salts, such as Omnicat 250 (manufactured by IGM Resins B.V), and WPI-113, 116, 124, 169, 170 (manufactured by FUJIFILM Wako Pure Chemical Corporation).

From the viewpoint of coatability, it is preferable that the viscosity of the resin composition according to the present embodiment at 25°C be 0.5 Pa·s or more and 10.0 Pa·s or less, it is more preferable that the viscosity thereof be 0.8 Pa·s or more and 9.0 Pa·s or less, and it is still more preferable that the viscosity thereof be 1.0 Pa·s or more and 7.0 Pa·s or less.

### (Optical fiber)

Figure 1 is a schematic cross-sectional view showing one example of the optical fiber according to the present embodiment. The optical fiber 10 comprises a glass fiber 13 which includes a core 11 and a cladding 12, and a coating resin layer 16 which includes a primary resin layer 14 and a secondary resin layer 15 and is provided on an outer periphery of the glass fiber 13.

The cladding 12 surrounds the core 11. The core 11 and the cladding 12 mainly contain a glass such as silica glass, and for example, silica glass to which germanium has been added or pure silica glass can be used for the core 11, and pure silica glass or silica glass to which fluorine has been added can be used for the cladding 12.

In Figure 1, for example, the outer diameter (D2) of the glass fiber 13 is about 100 µm to 125 µm, and the diameter (D1) of the core 11 which constitutes the glass fiber 13 is about 7 µm to 15 µm. The thickness of the coating resin layer 16 is usually about 22 µm to 70 µm. The thickness of each of the primary resin layer 14 and the secondary resin layer 15 may be about 5 µm to 50 µm.

When the outer diameter of the glass fiber 13 is about 125 µm and the thickness of the coating resin layer 16 is 60 µm or more and 70 µm or less, the thickness of each of the primary resin layer 14 and the secondary resin layer 15 may be about 10 µm to 50 µm, and for example, the thickness of the primary resin layer 14 may be 35 µm, and the thickness of the secondary resin layer 15 may be 25 µm. The outer diameter of the optical fiber 10 may be about 245 µm to 265 µm.

When the outer diameter of the glass fiber 13 is about 125 µm and the thickness of the coating resin layer 16 is 24 µm or more and 48 µm or less, the thickness of each of the primary resin layer 14 and the secondary resin layer 15 may be about 8 µm to 38 µm, and for example, the thickness of the primary resin layer 14 may be 25 µm, and the thickness of the secondary resin layer 15 may be 10 µm. The outer diameter of the optical fiber 10 may be about 173 µm to 221 µm.

When the outer diameter of the glass fiber 13 is about 100 µm and the thickness of the coating resin layer 16 is 22 µm or more and 37 µm or less, the thickness of each of the primary resin layer 14 and the secondary resin layer 15 may be about 5 µm to 32 µm, and for example, the thickness of the primary resin layer 14 may be 25 µm, and the thickness of the secondary resin layer 15 may be 10 µm. The outer diameter of the optical fiber 10 may be about 144 µm to 174 µm.

By applying the resin composition according to the present embodiment to the secondary resin layer, an optical fiber excellent in lateral pressure characteristics can be prepared.

The method for producing an optical fiber according to the present embodiment comprises an application step of applying the above resin composition to an outer periphery of a glass fiber comprising a core and a cladding, and a curing step of curing the resin composition by irradiation with ultraviolet rays after the application step. The resin composition according to the present embodiment is not directly applied to the glass fiber, but a resin composition for a primary coating is directly applied to the glass fiber. That is to say, in the application step, a primary coating, which is in contact with the glass fiber, and a secondary coating with the resin composition according to the present embodiment, which is not in contact with the glass fiber, are formed.

From the viewpoint of improving lateral pressure characteristics of the optical fiber, it is preferable that the Young's modulus of the secondary resin layer at 23°C±2°C be 800 MPa or more, it is more preferable that the Young's modulus thereof be 1000 MPa or more, and it is still more preferable that the Young's modulus thereof be 1200 MPa or more. The upper limit of the Young's modulus of the secondary resin layer is not particularly restricted, but from the viewpoint of imparting moderate toughness to the secondary resin layer, the Young's modulus thereof at 23°C±2°C may be 3000 MPa or less, 2700 MPa or less, or 2500 MPa or less.

The Young's modulus of the secondary resin layer can be measured by the following method. First, the optical fiber is immersed in a mixed solvent of acetone and ethanol, and only the coating resin layer is pulled out in a tubular shape. In this case, the primary resin layer and the secondary resin layer are integrated, but the Young's modulus of the primary resin layer is 1/1000 or more and 1/10000 or less of the Young's modulus of the secondary resin layer, so that the Young's modulus of the primary resin layer can be ignored. Next, from the coating resin layer, the solvent is removed by vacuum drying, thereafter, a tensile test (tension speed is 1 mm/min) is carried out at 23°C, and by the secant formula of 2.5% strain, the Young's modulus can be determined.

The primary resin layer 14 can be formed by, for example, curing a resin composition containing urethane (meth)acrylate, a (meth)acrylate compound other than urethane (meth)acrylate, a photopolymerization initiator, etc. The resin composition to form the primary resin layer has formulation different from that of the resin composition for a secondary coating. The resin composition for a primary coating can be prepared using conventionally known technique.

It is preferable that the Young's modulus of the primary resin layer be 0.5 MPa or less. If the Young's modulus of the primary resin layer exceeds 0.5 MPa, an external force is easily transmitted to the glass fiber, and the increase in transmission loss due to microbend is sometimes accelerated.

In some cases, a plurality of optical fibers is arranged in parallel and united with a resin for a ribbon to form an optical fiber ribbon. The resin composition according to the present disclosure can also be used as a resin for a ribbon. Due to this, the lateral pressure characteristics can be improved when an external force is applied to the optical fiber ribbon similarly to the optical fiber.

### Examples

Hereinafter, the present disclosure will be described in more detail showing the results of evaluation tests using Examples according to the present disclosure and Comparative Examples. The present invention is in no way limited to these Examples.

### [Mixture of urethane (meth)acrylate and (meth)acrylate (A)]

### (A-1)

Polypropylene glycol (PPG600) of Mn 600 and 2,4-tolylene diisocyanate (TDI) were reacted at a molar ratio (NCO/OH) of NCO to OH of 2.0 at 60°C for one hour in the presence of isodecyl acrylate (IDA) having a hydroxyl value of 0.5 mgKOH/g, thereby preparing an NCO-terminated prepolymer. The amount of IDA was adjusted in such a manner that the mass ratio between urethane acrylate and IDA contained in the mixture became 75:25. As the catalyst, dibutyltin dilaurate was added in an amount of 200 ppm based on the final total amount of charge. Next, 2-hydroxyethyl acrylate (HEA) was added in such a manner that the molar ratio of OH of HEA to NCO of the NCO-terminated prepolymer became 1.05, and reaction was carried out at 60°C for one hour, thereby obtaining a mixture (A-1) of urethane acrylate and IDA.

### (A-2)

A mixture (A-2) of urethane acrylate and 2-(2-ethoxyethoxy)ethyl acrylate (EOEOEA) was obtained in the same manner as in the preparation of the mixture (A-1), except that IDA was changed to EOEOEA having a hydroxyl value of 6.8 mgKOH/g.

### (A-3)

A mixture (A-3) of urethane acrylate and 2-ethylhexyl acrylate (2EHA) was obtained in the same manner as in the preparation of the mixture (A-1), except that IDA was changed to 2EHA having a hydroxyl value of 1.6 mgKOH/g.

### (A-4)

A mixture (A-4) of urethane acrylate and isobornyl acrylate (IBXA) was obtained in the same manner as in the preparation of the mixture (A-1), except that IDA was changed to IBXA having a hydroxyl value of 2.2 mgKOH/g.

### (A-5)

A mixture (A-5) of urethane acrylate and lauryl acrylate (LA) was obtained in the same manner as in the preparation of the mixture (A-1), except that IDA was changed to LA having a hydroxyl value of 2.1 mgKOH/g.

### (A-6)

A mixture (A-6) of urethane acrylate and phenoxyethyl acrylate (PEA) was obtained in the same manner as in the preparation of the mixture (A-1), except that IDA was changed to PEA having a hydroxyl value of 3.5 mgKOH/g.

### (A-7)

A mixture (A-7) of urethane acrylate and nonylphenol polyethylene glycol (n=4) acrylate (4EONPA) was obtained in the same manner as in the preparation of the mixture (A-1), except that IDA was changed to 4EONPA having a hydroxyl value of 3.3 mgKOH/g.

### (A-8)

A mixture (A-8) of urethane acrylate and 1,6-hexanediol diacrylate (HDDA) was obtained in the same manner as in the preparation of the mixture (A-1), except that IDA was changed to HDDA having a hydroxyl value of 4.4 mgKOH/g, and the amount of HDDA was adjusted in such a manner that the mass ratio between urethane acrylate and HDDA contained in the mixture became 90:10.

### (A-9)

A mixture (A-9) of urethane acrylate and tripropylene glycol diacrylate (TPGDA) was obtained in the same manner as in the preparation of the mixture (A-1), except that IDA was changed to TPGDA having a hydroxyl value of 6.1 mgKOH/g, and PPG600 was changed to polypropylene glycol (PPG1000) of Mn 1000.

### (A-10)

A mixture (A-10) of urethane acrylate and TPGDA was obtained in the same manner as in the preparation of the mixture (A-9), except that TPGDA having a hydroxyl value of 6.1 mgKOH/g was changed to TPGDA having a hydroxyl value of 8.2 mgKOH/g.

### (A-11)

A mixture (A-11) of urethane acrylate and TPGDA was obtained in the same manner as in the preparation of the mixture (A-1), except that IDA was changed to TPGDA having a hydroxyl value of 11.5 mgKOH/g, and PPG600 was changed to polypropylene glycol (PPG2000) of Mn 2000.

### (A-12)

A mixture (A-12) of urethane acrylate and TPGDA was obtained in the same manner as in the preparation of the mixture (A-11), except that TPGDA having a hydroxyl value of 11.5 mgKOH/g was changed to TPGDA having a hydroxyl value of 14 mgKOH/g.

### (A-13)

It was tried to prepare an NCO-terminated prepolymer in the same manner as in the preparation of the mixture (A-9), except that TPGDA having a hydroxyl value of 6.1 mgKOH/g was changed to TPGDA having a hydroxyl value of 20 mgKOH/g, but gelation occurred, and a mixture (A-13) of urethane acrylate and TPGDA was not able to be obtained.

### (A-14)

It was tried to prepare an NCO-terminated prepolymer in the same manner as in the preparation of the mixture (A-9), except that IDA was changed to EOEOEA having a hydroxyl value of 18 mgKOH/g, but gelation occurred, and a mixture (A-14) of urethane acrylate and EOEOEA was not able to be obtained.

### [Resin composition for secondary coating]

In order to prepare a resin composition for a secondary coating, bisphenol A epoxy diacrylate (manufactured by OSAKA ORGANIC CHEMICAL INDUSTRY LTD., Viscoat#540), phenoxyethyl acrylate (PEA), tripropylene glycol diacrylate (TPGDA), bisphenol A-EO adduct diacrylate (manufactured by OSAKA ORGANIC CHEMICAL INDUSTRY LTD., Viscoat#700), 2,4,6-trimethylbenzoyl diphenylphosphine oxide (Omnirad TPO), and 1-hydroxycyclohexyl phenyl ketone (Omnirad 184) were prepared.

The components were mixed in compounding amounts (part(s) by mass) shown in Table 1 or Table 2 to prepare resin compositions for a secondary coating of Examples and Comparative Examples.

### (Viscosity)

The viscosity of each of the resin compositions was measured under the conditions of 25°C, a spindle of No. 18, and a rotational speed of 10 rpm using a B-type viscometer ("digital viscometer DV-11" manufactured by AMETEK Brookfield).

### [Resin Composition for Primary Coating]

Polypropylene glycol of Mn 3000 and isophorone diisocyanate were reacted at NCO/OH of 1.5 at 60°C for one hour, thereby preparing an NCO-terminated prepolymer. As the catalyst during the reaction, dibutyltin dilaurate was added in an amount of 200 ppm based on the final total amount of charge. Next, HEA was added in such a manner that the molar ratio of OH of HEA to NCO of the NCO-terminated prepolymer became 1.05, and reaction was carried out at 60°C for one hour, thereby obtaining urethane acrylate (Z-1).

70 Parts by mass of the urethane acrylate (Z-1), 19 parts by mass of nonylphenol EO modified (n≈4) acrylate, 10 parts by mass of isobornyl acrylate, and 1 part by mass of Omnirad TPO were mixed, thereby obtaining a resin composition for a primary coating.

### [Preparation of Optical Fiber]

To an outer periphery of a glass fiber 13 with a diameter of 125 µm, the resin composition for a primary coating and the resin composition for a secondary coating were each applied. Subsequently, the compositions were irradiated with ultraviolet rays to cure each of the compositions, thereby forming a coating resin layer 16 including a primary resin layer 14 and a secondary resin layer 15, and thus, an optical fiber 10 was prepared. The thickness of the primary resin layer 14 was set to 35 µm, and the thickness of the secondary resin layer 15 was set to 25 µm.

### (Young's modulus of secondary resin layer)

The optical fiber was immersed in a mixed solvent of acetone and ethanol, and only the coating resin layer was pulled out in a tubular shape. Next, from the coating resin layer, the solvent was removed by vacuum drying, thereafter, a tensile test (tension speed was 1 mm/min) was carried out at 23°C, and by the secant formula of 2.5% strain, a Young's modulus of the secondary resin layer was determined.

**[Table 1]**

| | Ex. 1 | Ex. 2 | Ex. 3 | Ex. 4 | Ex. 5 | Ex. 6 | Ex. 7 |
|---|---|---|---|---|---|---|---|
| (Meth)acrylate (A) (mgKOH/g) | IDA (0.5) | EOEOEA (6.8) | 2EHA (1.6) | IBXA (2.2) | LA (2.1) | PEA (3.5) | 4EONPA (3.3) |
| A-1 | 24 | - | - | - | - | - | - |
| A-2 | - | 20 | - | - | - | - | - |
| A-3 | - | - | 20 | - | - | - | - |
| A-4 | - | - | - | 16 | - | - | - |
| A-5 | - | - | - | - | 20 | - | - |
| A-6 | - | - | - | - | - | 20 | - |
| A-7 | - | - | - | - | - | - | 20 |
| PEA | - | - | - | - | - | 15 | - |
| TPGDA | 20 | 30 | 30 | 29 | 30 | 15 | 30 |
| Viscoat#700 | 10 | - | - | - | - | - | - |
| Viscoat#540 | 46 | 50 | 50 | 55 | 50 | 50 | 50 |
| Omnirad TPO | 1 | 1 | 1 | 1 | 1 | 1 | 1 |
| Omnirad 184 | 1 | 1 | 1 | 1 | 1 | 1 | 1 |
| Viscosity (Pa·s) | 4.7 | 4.8 | 4.0 | 4.9 | 4.2 | 2.5 | 7.5 |
| Young's modulus (MPa) | 1520 | 1580 | 1620 | 1810 | 1600 | 2010 | 1530 |

**[Table 2]**

| | Ex. 8 | Ex. 9 | Ex. 10 | Ex. 11 | Ex. 12 | Comp. Ex. 1 | Comp. Ex. 2 | Comp. Ex. 3 |
|---|---|---|---|---|---|---|---|---|
| (Meth)acrylate (A) (mgKOH/g) | HDDA (4.4) | TPGDA (6.1) | TPGDA (8.2) | TPGDA (11.5) | IBXA (2.2) | TPGDA (14.0) | TPGDA (20) | EOEOEA (18) |
| A-4 | - | - | - | - | 50 | - | - | - |
| A-8 | 40 | - | - | - | - | - | - | - |
| A-9 | - | 20 | - | - | - | - | - | - |
| A-10 | - | - | 20 | - | - | - | - | - |
| A-11 | - | - | - | 20 | - | - | - | - |
| A-12 | - | - | - | - | - | 20 | - | - |
| A-13 | - | - | - | - | - | - | 20 | - |
| A-14 | - | - | - | - | - | - | - | 20 |
| TPGDA | 30 | 30 | 30 | 30 | 10 | 30 | - | - |
| Viscoat#700 | - | 10 | 10 | - | 40 | - | - | - |
| Viscoat#540 | 40 | 30 | 40 | 50 | - | 50 | - | - |
| Omnirad TPO | 1 | 1 | 1 | 1 | 1 | 1 | - | - |
| Omnirad 184 | 1 | 1 | 1 | 1 | 1 | 1 | - | - |
| Viscosity (Pa·s) | 4.7 | 3.7 | 4.0 | 8.1 | 0.9 | 10.5 | - | - |
| Young's modulus (MPa) | 1600 | 1240 | 1140 | 1070 | 1050 | 720 | - | - |

### Reference Signs List

10 Optical fiber
11 Core
12 Cladding
13 Glass fiber
14 Primary resin layer
15 Secondary resin layer
16 Coating resin layer

## Claims

1. A method for producing a resin composition for a secondary coating of an optical fiber, comprising:
a step of reacting a polyol, a diisocyanate and a hydroxyl group-containing (meth)acrylate in the presence of a (meth)acrylate not having a hydroxyl group to obtain a mixture of urethane (meth)acrylate and the (meth)acrylate not having a hydroxyl group; and
a step of adding a photopolymerization initiator to the mixture to obtain a resin composition; wherein
a hydroxyl value of the (meth)acrylate not having a hydroxyl group is 12.0 mgKOH/g or less.

2. The method for producing a resin composition according to claim 1, wherein the hydroxyl value of the (meth)acrylate not having a hydroxyl group is 8.0 mgKOH/g or less.

3. The method for producing a resin composition according to claim 1 or claim 2, wherein the (meth)acrylate not having a hydroxyl group is at least one selected from the group consisting of isodecyl (meth)acrylate, 2-(2-ethoxyethoxy)ethyl (meth)acrylate, 2-ethylhexyl (meth)acrylate, nonylphenol polyethylene glycol (meth)acrylate, isobornyl (meth)acrylate, lauryl (meth)acrylate, phenoxyethyl (meth)acrylate, tripropylene glycol di(meth)acrylate, and 1,6-hexanediol di(meth)acrylate.

4. The method for producing a resin composition according to any one of claims 1 to 3, wherein epoxy (meth)acrylate is further added in the step of obtaining a resin composition.

5. A resin composition for a secondary coating of an optical fiber, the composition comprising:
a photopolymerizable compound and a photopolymerization initiator;
wherein the photopolymerizable compound comprises a mixture of a (meth)acrylate not having a hydroxyl group, a hydroxyl value of the (meth)acrylate being 12.0 mgKOH/g or less, and urethane (meth)acrylate.

6. The resin composition according to claim 5, wherein the hydroxyl value of the (meth)acrylate not having a hydroxyl group is 8.0 mgKOH/g or less.

7. The resin composition according to claim 5 or claim 6, wherein the (meth)acrylate not having a hydroxyl group is at least one selected from the group consisting of isodecyl (meth)acrylate, 2-(2-ethoxyethoxy)ethyl (meth)acrylate, 2-ethylhexyl (meth)acrylate, nonylphenol polyethylene glycol (meth)acrylate, isobornyl (meth)acrylate, lauryl (meth)acrylate, phenoxyethyl (meth)acrylate, tripropylene glycol di(meth)acrylate, and 1,6-hexanediol di(meth)acrylate.

8. The resin composition according to any one of claims 5 to 7, wherein the photopolymerizable compound further comprises epoxy (meth)acrylate.

9. An optical fiber comprising:
a glass fiber comprising a core and a cladding;
a primary resin layer being in contact with the glass fiber and coating the glass fiber; and
a secondary resin layer coating the primary resin layer; wherein
the secondary resin layer comprises a cured product of the resin composition according to any one of claims 5 to 8.

10. A method for producing an optical fiber, comprising:
an application step of applying a resin composition obtained by the method for producing a resin composition according to any one of claims 1 to 4 to an outer periphery of a glass fiber comprising a core and a cladding; and
a curing step of curing the resin composition by irradiation with ultraviolet rays after the application step.
